# EUROPÄISCHE PATENTSCHRIFT

(11) **EP 1 532 429 B1**
(45) Veröffentlichungstag und Bekanntmachung des Hinweises auf die Patenterteilung: **30.11.2011**
(21) Anmeldenummer: 03790687.2
(22) Anmeldetag: 05.08.2003
(51) Int. Cl.: G01L 1/14

(54) **SPANNUNGS-/DEHNUNGSMESSSENSOR SOWIE VERFAHREN ZUR SPANNUNGS-/DEHNUNGSMESSUNG**
STRESS/EXTENSION-MEASURING SENSOR AND METHOD FOR MEASURING STRESS/EXPANSION
CAPTEUR DE MESURE DE TENSION/D'ALLONGEMENT ET PROCEDE POUR MESURER UNE TENSION ET/OU UN ALLONGEMENT

(30) Priorität: 06.08.2002 DE 10236051
(43) Veröffentlichungstag der Anmeldung: 25.05.2005
(73) Patentinhaber: Airbus Operations GmbH, 21129 Hamburg (DE)
(72) Erfinder: ZIMMERMANN, Werner, 85640 Putzbrunn (DE); JÄNKER, Peter, 85521 Riemerling (DE)
(74) Vertreter: Schatt, Markus F.
(86) Internationale Anmeldenummer: PCT/DE2003/002648
(87) Internationale Veröffentlichungsnummer: WO 2004/020962

(56) Entgegenhaltungen:
- EP-A- 0 766 077
- EP-A- 0 772 034
- DE-C- 19 854 062
- US-A- 3 614 677
- US-A- 4 114 428
- US-A- 5 392 654

## Beschreibung

Die vorliegende Erfindung betrifft einen Spannungs-/Dehnungsmesssensor zur kontinuierlichen Überwachung von Spannungs-/Dehnungszuständen, insbesondere in geschraubten Bolzen, sowie ein entsprechendes Verfahren. Die Erfindung findet u.a. bei Wartungsarbeiten Anwendung, um Spannungs-/Dehnungszustände zu kontrollieren, so dass beispielsweise Anzugsmomente von geschraubten Bolzen auf einfache Weise überwacht und eingestellt werden können.

Hinsichtlich dieses Anwendungsbereiches sind aus dem Stand der Technik sogenannte Drehmoment-Schlüssel bekannt, die beispielsweise mit Ultraschallsensoren arbeiten.

Daneben sind Dehnungssensoren bekannt, bei denen piezoelektrische Materialien zum Einsatz kommen. Hierbei wird der bekannte piezoelektrische Effekt ausgenutzt, so dass beim Einwirken einer Kraft auf das piezoelektrische Material durch elektrische Verschiebung Oberflächenladungen entstehen. Ein derartiger Sensor ist beispielsweise in WO 99/26046 beschrieben.

Problem hierbei ist jedoch, dass die auf Grund mechanischer Verformungsbeaufschlagung auftretende elektrische Ladungstrennung nur kurzfristig entsteht, so dass eine kontinuierliche Messung nicht möglich ist. Ferner ist in der Regel eine Ladungsverstärkung erforderlich, wie das in WO 99/26046 beschrieben ist, um die piezoelektrisch erzeugten Ladungen in eine dazu proportionale Spannung zu verwandeln.

Aus US 4,114,428 A ist ein abstimmbarer transducer mit einem LC-Element bekannt.

Somit liegt der vorliegenden Erfindung die Aufgabe zu Grunde, einen Spannungs-/Dehnungsmesssensor sowie ein entsprechendes Verfahren zu schaffen, der bzw. das einfach und unkompliziert einsetzbar ist und eine kontinuierliche Überwachung von Spannungs-/Dehnungszuständen ermöglicht.

Die Aufgabe wird durch einen Spannungs-/Dehnungsmesssensor gemäß Patentanspruch 1 gelöst,

Wesentlich hierbei ist, dass durch die Verwendung von druckabhängigen elektromagnetischen Bauelementen sowie deren Anordnung zu einem elektromagnetischen Schwingkreis, dessen Resonanzfrequenz für die Bestimmung von Dehnungs-/Spannungszuständen ausgenutzt wird. Prinzipiell können hierbei komplementäre Bauteile (Impedanz, Induktivität etc.) mit entsprechenden druckabhängigen Eigenschaften verwendet werden. Im Falle einer druckabhängige Impedanz wäre dies z.B. eine Induktivität und umgekehrt.

Im Gegensatz zur direkten Messung von kurzfristig auftretenden Ladungstrennungen - wie das im Stand der Technik erfolgt - ist hier auf Grund der Messung variierender Resonanzfrequenzen eine kontinuierliche Messung möglich. Das Ausnutzen einfacher druckabhängiger, elektrischer Bauelemente stellt eine besonders einfache und effektive Messmethode dar und ermöglicht flexible Ausführungsformen. Die Erfindung weist somit vorteilhafterweise eine einfache Anordnung und Handhabbarkeit auf, was auch dadurch hervorgerufen wird, dass keine separate Stromversorgung erforderlich ist. Zudem werden lediglich passive Bauteile verwendet.

Der Sensor kann eine erste Induktivität sowie ein weiteres Element umfassen, das zumindest eine druckabhängige erste Impedanz aufweist. Die druckabhängige erste Impedanz bildet mit der ersten Induktivität einen elektromagnetischen Schwingkreis, dessen Resonanzfrequenz sich bei Druckbeaufschlagung des Elements ändert. Selbstverständlich kann das Element weitere elektromagnetische Bauteile (Widerstände, Induktivitäten etc.) enthalten, was jedoch an dem hier zugrundeliegenden Prinzip nichts ändert.

Gemäß einer bevorzugten Ausführungsform der Erfindung weist das weitere Element des Sensors zumindest eine druckabhängige zweite Impedanz sowie eine zweite Induktivität auf, wobei die druckabhängige Impedanz und die zweite Induktivität parallel geschaltet sind und einen elektromagnetischen Schwingkreis bilden, so dass sich dessen Resonanzfrequenz bei ändernder Druckbeaufschlagung des Elements verschiebt.

Zweckmäßigerweise besteht hierbei das Element aus piezoelektrischem oder magnetostriktivem Material. Daneben können jegliche Werkstoffe verwendet werden, die eine last- bzw. druckabhängige elektromechanische Kopplung bewirken. Diese Materialien bzw. Werkstoffe lassen sich auf Grund ihres geringen Gewichtes und geringer Abmessungen gut in bestehende Anordnungen integrieren.

Gemäß einer besonders bevorzugten Ausführungsform ist der Sensor im Wesentlichen als Folie ausgebildet, auf der die erste Induktivität sowie Kontaktflächen zur Kontaktierung des weiteren Elements angeordnet sind. Eine derartige folienförmige Ausgestaltung weist sich wiederum durch geringes Gewicht sowie geringe Abmessungen vorteilhaft aus.

Dabei ist es insbesondere vorteilhaft, dass der folienförmige Sensor das weitere Element zumindest teilweise im Bereich der Kontaktflächen umgibt. Durch ein Biegen oder Falten des folienförmigen Sensors kann die Kontaktierung des weiteren Elements problemlos und auf vielfältige Weise erfolgen.

Ferner ist es vorteilhaft, dass der mit der ersten Induktivität versehene Abschnitt des folienförmigen Sensors über das weitere Element übersteht, was ein Ankoppeln von Mess- oder Prüfgeräten erleichtert.

Es ist besonderes vorteilhaft, dass die erste Induktivität sowohl als Ein- als auch als Auskoppelelement dient, so dass die erste Induktivität einerseits zur Anregung des jeweiligen elektromagnetischen Schwingkreises und andererseits zur Messung der Resonanzfrequenz des jeweiligen elektromagnetischen Schwingkreises dient. Auf diese Weise ist eine berührungslose Kopplung sowohl bei Anregung des elektromagnetischen Schwingkreises als auch bei Abfrage des Spannungs-/Dehnungszustandes möglich. Der Sensor benötigt somit keine externen Zuleitungen.

Zur Abfrage des Spannungs-/Dehnungszustandes ist es zweckmäßig, einen Transceiver als Prüfgerät zu verwenden, der über die erste Induktivität an den Sensor ankoppelbar ist.

Gemäß einer besonders bevorzugten Ausführungsform ist das weitere Element in eine Unterlegscheibe integriert, die zwischen einem Befestigungsmittel und einer damit in Verbindung stehenden Struktur anbringbar ist. Auch bei dieser Ausführungsform ist es vorteilhaft, dass das weitere Element beispielsweise durch einen folienförmigen Abschnitt kontaktiert wird, und dass der mit der ersten Induktivität versehene Abschnitt des folienförmigen Sensors über die Unterlegscheibe übersteht, so dass ein Prüfgerät einfach ankoppelbar ist

Gemäß einer alternativen Ausführungsform ist es zweckmäßig, ein zweites Element in die Unterlegscheibe als Komparatorelement zu integrieren. Dies hat den Vorteil, dass bei der Bestimmung von Spannungs-/Dehnungszuständen Temperatur- oder Alterungseffekte kompensiert werden können, da lediglich Änderungen der Resonanzfrequenz erfasst werden.

Die eingangs genannte Aufgabe wird ferner durch ein Verfahren zur Spannungs-/Dehnungsmessung gemäß Patentanspruch 11 gelöst.

Zweckmäßig ist hierbei, dass das Element bei Druckbeaufschlagung komprimiert und bei verminderter Druckbeaufschlagung entlastet wird, und dass der jeweilige elektromagnetische Schwingkreis über die erste Induktivität angeregt wird.

Ferner ist es vorteilhaft, dass die Messung der Resonanzfrequenz des elektromagnetischen Schwingkreises über eine berührungrlose Ankopplung an die erste Induktivität erfolgt.

Gemäß einer alternativen Ausführungsform ist es zweckmäßig, mit Hilfe eines zweiten Elements eine Komparatormessung zur Kompensation von Temperatur- oder Alterungseffekten durchzuführen, da lediglich eine Änderung des Druck-/Spannungszustandes bzw. der Resonanzfrequenz erfasst wird.

Die Erfindung findet beispielsweise Anwendung zur Einstellung von Anzugsmomenten geschraubter Bolzen und ersetzt somit bekannte Drehmomentschlüssel.

Die Erfindung kann z.B. für Wartungsarbeiten an Flugzeugen, Hubschraubem oder anderen Verkehrsmitteln eingesetzt werden.

Nachstehend wird die Erfindung anhand der beigefügten Abbildungen in näheren Einzelheiten beschrieben. In denen zeigt:
- **Fig. 1**: eine schematische Darstellung des erfindungsgemäßen Sensors zur Bestimmung des Spannungs-/Dehnungszustandes eines geschraubten Bolzens;
- **Fig. 2**: eine Draufsicht auf einen folienförmig ausgebildeten Sensor;
- **Fig. 3**: eine Seitenansicht auf einen folienförmig ausgebildeten Sensor;
- **Fig. 4, 4a-c**: das elektrische Ersatzschaltbild des Sensors gemäß unterschiedlicher Ausführungsformen;
- **Fig. 5**: Darstellung der Resonanzfrequenz bei unterschiedlicher Druckbeaufschlagung; und
- **Fig. 6**: Resonanzfrequenz als Funktion der Druckbeaufschlagung,

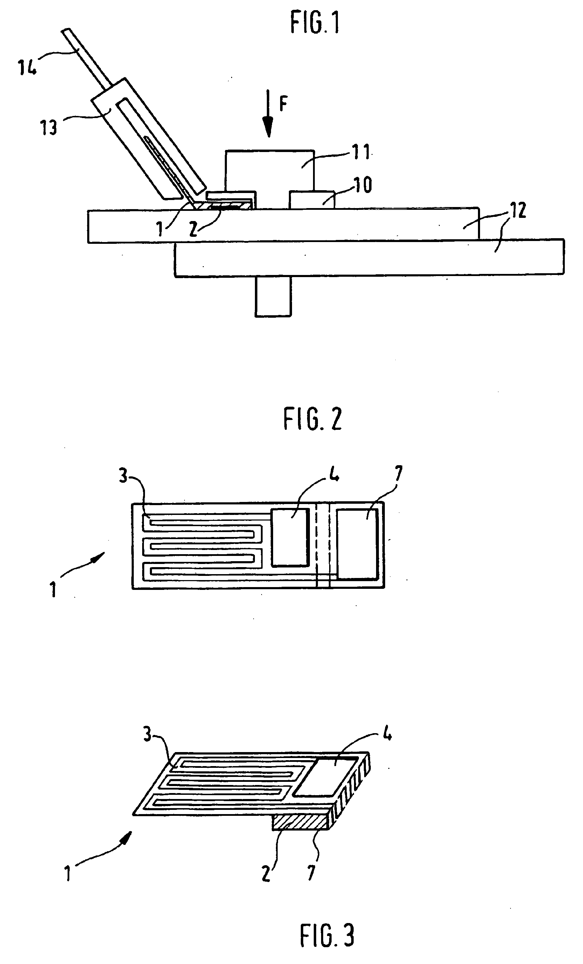

Fig. 1 zeigt in schematischer Darstellung den erfindungsgemäßen Sensor zur Bestimmung des Spannungs-/Dehnungszustandes eines geschraubten Bolzens. Der Sensor ist in Fig. 1 mit Bezugsziffer 1 bezeichnet und ist in eine Unterlegscheibe 10 integriert. Die Unterlegscheibe 10 mit integriertem Sensor 1, nachstehend auch als modifizierte Unterlegscheibe bezeichnet, ist zwischen einem Bolzen 11 und einer mit diesem in Verbindung stehenden Struktur 12 angeordnet. Ferner ist ein Prüfgerät 13 (z.B. ein Transceiver) berührungslos an den Sensor 1 angekoppelt, was nachstehend noch in näheren Einzelheiten beschrieben wird, Über eine Datenleitung 14 werden die vom Transceiver erfassten Daten an eine Auswerteeinheit (nicht dargestellt) weitergeleitet.

Der Sensor 1 umfasst ein piezoelektrisches oder magnetostriktives Element 2, das in Fig. 1 lediglich schematisch angedeutet ist. Prinzipiell sind Werkstoffe mit last- bzw. druckabhängiger elektromechanischer Kopplung einsetzbar. In Fig. 1 ist das Element 2 derart in die Unterlegscheibe 10 integriert, dass seine Oberfläche im Wesentlichen senkrecht zur Druckbeaufschlagungsrichtung F angeordnet ist, Das Element 2 ist über einen folienförmigen Abschnitt des Sensors 1 kontaktiert, wie den Figuren 2 und 3 zu entnehmen ist.

Fig. 2 zeigt eine Draufsicht auf einen folienförmigen Sensor 1, bei der das Element 2 nicht zu sehen ist. Auf dem folienförmigen Sensor ist eine erste Induktivität 3 mäanderförmig aufgetragen und mit entsprechenden Kontaktflächen 4 und 7 verbunden. Die Kontaktflächen 4, 7 dienen zur Kontaktierung des Elements 2. Hierzu wird der folienförmige Sensor gemäß Fig. 2 an den gestrichelt dargestellten Falt- bzw. Knickstellen umgebogen, um das Element 2, wie in Fig. 3 dargestellt, zu kontaktieren. Hierbei steht in der Regel der mit der ersten Induktivität 3 versehene Abschnitt des folienförmigen Sensors 1 über das Element 2 über, um ein Ankoppeln von Messgeräten (s. Fig. 1) zu erleichtern. Die in Fig. 3 dargestellte Sensoranordnung ist, wie eingangs beschrieben, in die Unterlegscheibe 10 integriert. Selbstverständlich kann die Sensoranordnung auch in andere Distanz- oder Zwischenstücke integriert sein.

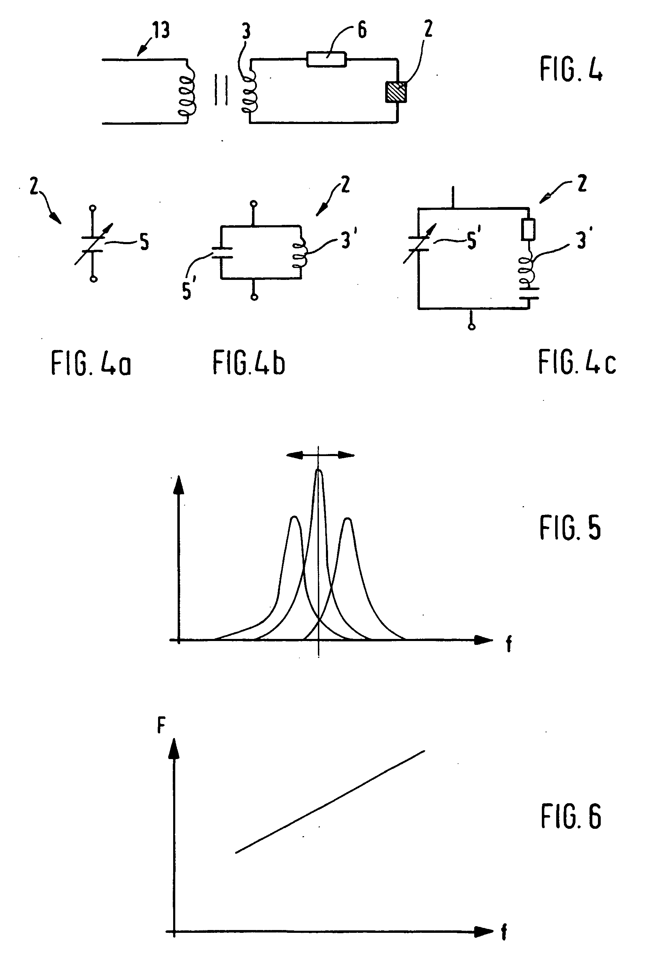

Fig. 4 zeigt das elektrische Ersatzschaltbild des Sensors 1 in unterschiedlichen Ausführungsformen. Das elektrische Element sowie die erste Induktivität sind dabei mit den selben Bezugsziffern wie in den vorhergehenden Abbildungen bezeichnet. Zudem ist in Fig. 4 der Leitungswiderstand mit Bezugsziffer 6 bezeichnet. Selbstverständlich können weiter elektrische Bauelemente in dem Ersatzschaltbild berücksichtigt werden, die jedoch keinen Einfluss auf das der Erfindung zugrundeliegende Prinzip haben.

Das elektrische Bauelement 2 kann unterschiedlich ausgestaltet sein. Gemäß Fig. 4a weist das Element 2 einen Kondensator mit druckabhängiger Impedanz auf und wird nachstehend mit Bezugsziffer 5 bezeichnet. Die druckabhängige Impedanz 5 bildet zusammen mit der ersten Induktivität 3 einen elektromagnetischen LC-Schwingkreis, dessen Resonanzfrequenz sich bei Druckbeaufschlagung ändert,

Gemäß einer bevorzugten Ausführungsform der Erfindung (Fig. 4b) umfasst das Element 2 selbst zumindest eine Impedanz sowie eine dazu parallel geschaltete Induktivität, die in Fig. 4b analog mit Bezugsziffern 5' bzw. 3' bezeichnet sind. Praktisch wird dies z,B, durch die Verwendung von piezoelektrischen und / oder magnetostriktiven Elementen 2 realisiert. Bei dieser Ausführungsform wird der elektromagnetische Schwingkreis, dessen Resonanzfrequenz sich bei Druckbeaufschlagung ändert, durch die Impedanz 5' und die Induktivität 3' gebildet. Dabei kann die Impedanz 5' und / oder die Induktivität 3' druckabhängig sein. Selbstverständlich können auch bei dieser Ausführungsform weitere parallel oder in Serie geschaltete Bauelemente berücksichtigt werden, die keinen Einfluss auf das Wirkungsprinzip haben.

Gemäß einer besonders bevorzugten Ausführungsform (Fig. 4c) besteht das Element 2 aus einem piezoelektrischen Material, Bekanntlich weist ein piezoelektrisches Element auf Grund der eigenen Körperlichkeit eine mechanische Resonanz sowie eine Eigenkapazität auf, und kann durch das in Fig. 4c gezeigte Ersatzschaltbild dargestellt werden. Folglich wird hier, analog zur zweiten Ausführungsform gemäß Fig. 4b, der elektromagnetische LC-Schwingkreis durch die ebenso mit Bezugsziffer 5' und 3' bezeichnete Impedanz bzw. Induktivität gebildet, so dass durch die Druckabhängigkeit der Impedanz 5' eine Verschiebung der Resonanzfrequenz bei Druckbeaufschlagung des piezoelektrischen Elements 2 erfolgt. Das piezoelektrische Element 2 erfährt bei Druckbeaufschlagung eine Kompression, was eine entsprechende Ladungsverschiebung zur Folge hat ("piezoelektrischer Effekt") und bei materialgegebener Druckabhängigkeit der Permitivität somit zur Verschiebung der Resonanzfrequenz führt.

In den oben beschriebenen Ausführungsformen erfährt das Element 2 bei Druckbeaufschlagung eine Kompression und bei verminderter Druckbeaufschlagung eine entsprechende Entlastung. Dies führt wiederum, wie oben geschildert, zu einer messbaren Resonanzfrequenzverschiebung, so dass auf einfache Weise der Zustand "Bolzen gespannt" oder "Bolzen ungespannt" kontinuierlich überwacht werden kann.

Eine Druckbeaufschlagung des Elements 2 bewirkt also z.B. eine Verschiebung der Resonanzfrequenz zu höheren Frequenzen, wie das beispielsweise in Fig. 5 bzw. Fig. 6 dargestellt ist. Nimmt die Druckbeaufschlagung des Elements 2 wieder ab, so verschiebt sich die Resonanzfrequenz entsprechend zu niedrigeren Frequenzen. Selbstverständlich kann auch eine Anordnung gewählt werden, bei der dies umgekehrt ist.

Ferner ist anzumerken, dass die Anregung des jeweiligen elektromagnetischen Schwingkreises über die erste Induktivität 3 erfolgt, die somit als Einkoppelelement dient. Dies kann berührungslos erfolgen (z.B. kapazitiv). Die erste Induktivität 3 dient jedoch gleichzeitig als Antenne bzw. Auskoppelelement zur Messung der Resonanzfrequenz. Auch hier erfolgt die Messung vorzugsweise berührungslos.

Gemäß einer weiteren Ausführungsform (nicht dargestellt) ist in der Unterlegscheibe 10 ein zweites Element (z.B. aus piezoelektrischem oder magnetostriktivem Material) angeordnet, das für Vergleichsmessungen vorgesehen ist. Hierzu wird eine messtechnische Brücke aus einem mechanisch belasteten und einem mechanisch unbelasteten Element 2 aufgebaut, wodurch die relative Verschiebung der Resonanzfrequenz erfasst werden kann. Eine derartige Anordnung bzw. Vergleichsmessung ermöglicht beispielsweise eine Kompensation von Temperatur-, Alterungseffekten oder dergleichen.

Abschließend ist anzumerken, dass prinzipiell eine Reiche von unterschiedlichen Anordnungsmöglichkeiten elektromagnetischer Bauelemente zu entsprechenden elektromagnetischen Schwingkreisen senkbar ist, die eine nach dem voranstehenden Prinzip durchführbare Spannungs-/Dehnungsmessung ermöglichen. Die oben beschriebenen Ausführungsformen stellen lediglich beispielhafte Ausgestaltungen dar und sollen den Gegenstand der vorliegenden Erfindung nicht einschränken,

## Patentansprüche

1. Spannungs-/Dehnungsmesssensor zur kontinuierlichen Überwachung von Spannungs-/Dehnungszuständen, insbesondere in geschraubten Bolzen, **dadurch gekennzeichnet, dass**
der Sensor (1) eine erste Induktivität (3) und mindestens ein, aus piezoelektrischem oder magnetostriktivem Material bestehendes weiteres Element (2) aufweist, welches zumindest eine zweite Impedanz (5') und eine zweite Induktivität (3') umfasst, wobei die zweite Impedanz (5') und/oder die zweite Induktivität (3') druckabhängig sind, so dass bei Änderung der Druckbeaufschlagung des Elements (2) sich die Resonanzfrequenz eines durch zweite Impedanz (5') und zweite Induktivität (3') gebildeten elektromagnetischen Schwingkreises (3', 5') ändert.

2. Spannungs-/Dehnungsmesssensor nach Anspruch 1, **dadurch gekennzeichnet, dass** das Element (2) zumindest eine druckabhängige zweite Impedanz (5') und eine zweite Induktivität (3') aufweist, wobei die druckabhängige zweite Impedanz (5') und die zweite Induktivität (3') parallel geschaltet sind und den elektromagnetischen Schwingkreis (3', 5') bilden.

3. Spannungs-/Dehnungsmesssensor nach einem der vorangegangenen Ansprüche, **dadurch gekennzeichnet, dass** der Sensor (1) im Wesentlichen als Folie ausgebildet ist, auf der die erste Induktivität (3) und Kontaktflächen (4, 7) zur Kontaktierung des Elements (2) angeordnet sind.

4. Spannungs-/Dehnungsmesssensor nach Anspruch 3, **dadurch gekennzeichnet, dass** der folienförmige Sensor (1) das Element (2) zumindest teilweise im Bereich der Kontaktflächen (4, 7) umgibt.

5. Spannungs-/Dehnungsmesssensor nach Anspruch 3 oder 4, **dadurch gekennzeichnet, dass** der mit der ersten Induktivität (3) versehene Abschnitt des folienförmigen Sensors (1) über das Element (2) übersteht.

6. Spannungs-/Dehnungsmesssensor nach einem der vorangegangenen Ansprüche, **dadurch gekennzeichnet, dass** die erste Induktivität (3) sowohl als Ein- als auch als Auskoppelelement dient.

7. Spannungs-/Dehnungsmesssensor nach einem der vorangegangenen Ansprüche, **dadurch gekennzeichnet, dass** ein Prüfgerät (14) zur Abfrage des Spannung- / Dehnungszustandes berührungslos an den Sensor (1) über die erste Induktivität (3) ankoppelbar ist.

8. Spannungs-/Dehnungsmesssensor nach einem der vorangegangenen Ansprüche, **dadurch gekennzeichnet**, das das Element (2) in eine Unterlegscheibe (10) integriert ist.

9. Spannungs-/Dehnungsmesssensor nach Anspruch 8, **dadurch gekennzeichnet, dass** für Vergleichsmessung zur Kompensation von Temperatur- und Alterungseffekten ein zweites Element in der Unterlegscheibe (10) angeordnet ist.

10. Spannungs-/Dehnungsmesssensor nach Anspruch 8 oder 9, **dadurch gekennzeichnet, dass** die Unterlegscheibe (10) zwischen einem Befestigungsmittel (11) und einer damit in Verbindung stehenden Struktur (12) anbringbar ist.

11. Verfahren zur Spannungs- /Dehnungsmessung, insbesondere in geschraubten Bolzen, **dadurch gekennzeichnet, dass** mindestens ein, aus einem piezoelektrischem oder magnetostriktivem Material bestehendes Element (2) eines Sensors (1) mit erster Induktivität (3), wobei das Element (2) eine zweite Impedanz (5') und eine zweite Induktivität (3') umfasst, wobei die zweite Impedanz (5') und/oder die zweite Induktivität (3') druckabhängig sind, derart zwischen einem Befestigungsmittel (11) und einer mit dem Befestigungsmittel in Verbindung stehenden Struktur (12) angeordnet wird, dass beim Ändern der Druckbeaufschlagung des Elementes (2) die Resonanzfrequenz eines durch Impedanz (5') und Induktivität (3') gebildeten elektromagnetischen Schwingkreises (3', 5') geändert wird.

12. Verfahren zur Spannungs- /Dehnungsmessung nach Anspruch 11,
**dadurch gekennzeichnet, dass** das Element (2) bei Druckbeaufschlagung komprimiert und bei verminderter Druckbeaufschlagung entlastet wird.

13. Verfahren zur Spannungs- /Dehnungsmessung nach Anspruch 11 oder 12, **dadurch gekennzeichnet, dass** der elektromagnetische Schwingkreis (3', 5') über die erste Induktivität (3) angeregt wird.

14. Verfahren zur Spannungs- /Dehnungsmessung nach Anspruch 11, 12 oder 13, **dadurch gekennzeichnet, dass** die Messung der Resonanzfrequenz des elektromagnetischen Schwingkreises (3', 5') über eine berührungslose Ankopplung an die erste Induktivität (3) erfolgt.

15. Verfahren zur Spannungs- /Dehnungsmessung nach einem der Ansprüche 11 bis 14, **dadurch gekennzeichnet, dass** eine Komparatormessung mit Hilfe eines zweiten Elementes erfolgt, so dass Verschiebungen der Resonanzfrequenz erfasst werden.

## Claims

1. Stress/strain measuring sensor for the continuous monitoring of stress/strain states, particularly in screwed bolts, **characterised in that**
the sensor (1) comprises a first inductance (3) and at least one further element (2) consisting of piezoelectric or magnetostrictive material, which comprises at least one second impedance (5') and a second inductance (3'), wherein the second impedance (5') and/or the second inductance (3') are pressure-sensitive, so the resonance frequency of an electromagnetic resonant circuit (3', 5') formed by the second impedance (5') and second inductance (3') changes when the pressure loading of the element (2) changes.

2. Stress/strain measuring sensor according to Claim 1, **characterised in that** the element (2) comprises at least one pressure-sensitive second impedance (5') and a second inductance (3'), wherein the pressure-sensitive second impedance (5') and the second inductance (3') are connected in parallel and form the electromagnetic resonant circuit (3', 5').

3. Stress/strain measuring sensor according to any one of the preceding claims, **characterised in that** the sensor (1) is essentially constructed as a film on which the first inductance (3) and contact surfaces (4, 7) for contacting the element (2) are arranged.

4. Stress/strain measuring sensor according to Claim 3, **characterised in that** the film-like sensor (1) surrounds the element (2) at least to some extent in the region of the contact surfaces (4, 7).

5. Stress/strain measuring sensor according to Claim 3 or 4, **characterised in that** the section of the film-like sensor (1) provided with the first inductance (3) projects beyond the element (2).

6. Stress/strain measuring sensor according to any one of the preceding claims, **characterised in that** the first inductance (3) is used both as coupling-in and coupling-out element.

7. Stress/strain measuring sensor according to any one of the preceding claims, **characterised in that** a testing device (14) for querying the stress/strain state can be contactlessly coupled to the sensor (1) via the first inductance (3).

8. Stress/strain measuring sensor according to any one of the preceding claims, **characterised in that** the element (2) is integrated into a washer (10).

9. Stress/strain measuring sensor according to Claim 8, **characterised in that** a second element is arranged in the washer (10) for comparative measurement for compensating temperature and ageing effects.

10. Stress/strain measuring sensor according to Claim 8 or 9, **characterised in that** the washer (10) can be fixed between a fixing means (11) and a structure (12) which is connected to the same.

11. Method for stress/strain measurement, particularly in screwed bolts, **characterised in that** at least one element (2), consisting of a piezoelectric or magnetostrictive material, of a sensor (1) with a first inductance (3), wherein the element (2) comprises a second impedance (5') and a second inductance (3'), wherein the second impedance (5') and/or the second inductance (3') are pressure-sensitive, is arranged in such a manner between a fixing means (11) and a structure (12) which is connected to the fixing means that the resonance frequency of an electromagnetic resonant circuit (3', 5') formed by impedance (5') and inductance (3') is changed when the pressure loading of the element (2) changes.

12. Method for stress/strain measurement according to Claim 11, **characterised in that** the element (2) is compressed during pressure loading and is relieved during reduced pressure loading.

13. Method for stress/strain measurement according to Claim 11 or 12, **characterised in that** the electromagnetic resonant circuit (3', 5') is excited by means of the first inductance (3).

14. Method for stress/strain measurement according to Claim 11, 12 or 13, **characterised in that** the measurement of the resonance frequency of the electromagnetic resonant circuit (3', 5') takes place via a contactless coupling to the first inductance (3).

15. Method for stress/strain measurement according to any one of Claims 11 to 14, **characterised in that** a comparator measurement takes place with the aid of a second element, so that shifts in the resonance frequency are detected.

## Revendications

1. Capteur de mesure de tension et d'allongement destiné à contrôler de façon continue des états de tension et d'allongement, en particulier dans des boulons vissés, **caractérisé en ce que**
le capteur (1) présente une première inductance (3) et au moins un autre élément (2) à base de matériau piézoélectrique ou magnétostrictif, lequel élément comprend au moins une seconde impédance (5') et une seconde inductance (3'), la seconde impédance (5') et/ou la seconde inductance (3') étant dépendantes de la pression, de sorte que, en cas de variation de la sollicitation par pression de l'élément (2), la fréquence de résonance d'un circuit oscillant (3', 5') électromagnétique, formé par la seconde impédance (5') et la seconde inductance (3'), varie.

2. Capteur de mesure de tension et d'allongement selon la revendication 1, **caractérisé en ce que** l'élément (2) présente au moins une seconde impédance (5') dépendante de la pression et une seconde inductance (3'), la seconde impédance (5') dépendante de la pression et la seconde inductance (3') étant branchées en parallèle et formant le circuit oscillant (3', 5') électromagnétique.

3. Capteur de mesure de tension et d'allongement selon l'une quelconque des revendications précédentes, **caractérisé en ce que** le capteur (1) est conçu sensiblement sous forme de film, sur lequel la première inductance (3) et les surfaces de contact (4, 7) sont disposées pour la mise en contact avec l'élément (2).

4. Capteur de mesure de tension et d'allongement selon la revendication 3, **caractérisé en ce que** le capteur (1) sous forme de film entoure l'élément (2) au moins partiellement dans la zone des surfaces de contact (4, 7).

5. Capteur de mesure de tension et d'allongement selon la revendication 3 ou 4, **caractérisé en ce que** la partie, dotée de la première inductance (3), du capteur (1) sous forme de film dépasse de l'élément (2).

6. Capteur de mesure de tension et d'allongement selon l'une quelconque des revendications précédentes, **caractérisé en ce que** la première inductance (3) sert aussi bien d'élément de couplage que d'élément de découplage.

7. Capteur de mesure de tension et d'allongement selon l'une quelconque des revendications précédentes, **caractérisé en ce qu'**un appareil de test (14) peut être couplé sans contact au capteur (1) par la première inductance (3) pour interroger l'état de tension et d'allongement.

8. Capteur de mesure de tension et d'allongement selon l'une quelconque des revendications précédentes, **caractérisé en ce que** l'élément (2) est intégré dans une rondelle (10).

9. Capteur de mesure de tension et d'allongement selon la revendication 8, **caractérisé en ce que**, pour la mesure de comparaison et pour la compensation d'effets de température et de vieillissement, un second élément est disposé dans la rondelle (10).

10. Capteur de mesure de tension et d'allongement selon la revendication 8 ou 9, **caractérisé en ce que** la rondelle (10) peut être placée entre un moyen de fixation (11) et une structure (12) en liaison avec le moyen de fixation.

11. Procédé pour mesurer la tension et l'allongement, en particulier dans des boulons vissés, **caractérisé en ce qu'**au moins un élément (2), à base d'un matériau piézoélectrique ou magnétostrictif, d'un capteur (1) est disposé avec la première inductance (3), l'élément (2) comprenant une seconde impédance (5') et une seconde inductance (3'), la seconde impédance (5') et/ou la seconde inductance (3') étant dépendantes de la pression, entre un moyen de fixation (11) et une structure (12) en liaison avec le moyen de fixation, de telle sorte que, en cas de variation de la sollicitation par pression de l'élément (2), la fréquence de résonance d'un circuit oscillant (3', 5') électromagnétique, formé par l'impédance (5') et l'inductance (3'), est modifiée.

12. Procédé pour la mesure de tension et d'allongement selon la revendication 11, **caractérisé en ce que** l'élément (2) est comprimé en cas de sollicitation par pression et est déchargé en cas de sollicitation par pression réduite.

13. Procédé pour la mesure de tension et d'allongement selon la revendication 11 ou 12, **caractérisé en ce que** le circuit oscillant (3', 5') électromagnétique est excité par la première inductance (3).

14. Procédé pour mesurer la tension et l'allongement selon la revendication 11, 12 ou 13, **caractérisé en ce que** la mesure de la fréquence de résonance du circuit oscillant (3', 5') électromagnétique s'effectue au moyen d'un couplage sans contact avec la première inductance (3).

15. Procédé pour mesurer la tension et l'allongement selon l'une quelconque des revendications 11 à 14, **caractérisé en ce qu'**une mesure du comparateur s'effectue à l'aide d'un second élément, de sorte que des décalages de la fréquence de résonance sont détectés.
